# EUROPEAN PATENT SPECIFICATION

(11) **EP 3 121 879 B1**
(45) Date of publication and mention of the grant of the patent: **02.05.2018**
(21) Application number: 15178190.3
(22) Date of filing: 24.07.2015
(51) Int. Cl.: H01M 4/485, H01M 4/505, H01M 4/525, C01G 53/00, H01M 4/131, H01M 10/05, H01M 4/62, H01M 10/054

(54) **ACTIVE CATHODE MATERIAL AND ITS USE IN RECHARGEABLE ELECTROCHEMICAL CELLS**
AKTIVES KATHODENMATERIAL UND DESSEN VERWENDUNG IN AUFLADBAREN ELEKTROCHEMISCHEN ZELLEN
MATÉRIAU DE CATHODE ACTIF ET SON UTILISATION DANS DES CELLULES ÉLECTROCHIMIQUES RECHARGEABLES

(43) Date of publication of application: 25.01.2017
(73) Proprietor: BASF SE, 67056 Ludwigshafen am Rhein (DE)
(72) Inventor: SCHULZ-DOBRICK, Martin, Fukushima 553-0003 (JP); FUKUYAMA, Sayuri, Osaka 564-0028 (JP); KOMABA, Shinichi, Saitama (JP); KUBOTA, Kei, Saitama (JP); ASARI, Takuya, Tokyo (JP)
(74) Representative: BASF IP Association

(56) References cited:
- WO-A1-2014/122546
- WO-A2-2015/075520
- US-A1- 2015 171 423
- HIROAKI YOSHIDA ET AL: "P2-type Na2/3Ni1/3Mn2/3-xTixO2 as a new positive electrode for higher energy Na-ion batteries", CHEMICAL COMMUNICATIONS, vol. 50, no. 28, 1 January 2014 (2014-01-01), page 3677, XP055189540, ISSN: 1359-7345, DOI: 10.1039/c3cc49856e

## Description

The present invention relates to an active cathode material of the general formula (I)

MₓNi_{a-y}M¹_{b}M²_{c}M³_{y}O₂ (I)

in which the variables are each defined as follows:
- M: is an alkali metal,
- M¹: is V, Cr, Mn, Fe, Co or a mixture thereof,
- M²: is Ge, Sn, Ti, Zr or a mixture thereof,
- M³: is Mg, Zn, Cu or a mixture thereof,
- x: is in the range from 0.5 to 0.8,
- a: is in the range from 0.1 to 0.4,
- b: is in the range from 0.05 to 0.7,
- c: is in the range from 0.02 to 0.6,
- y: is in the range from 0.05 to 0.2
wherein a + b + c = 1.

The present invention further relates to an electrode material comprising said active cathode material, to electrodes produced from or using said electrode material and to a rechargeable electrochemical cell comprising at least one electrode. The present invention further relates to a process for preparing said active cathode material of the general formula (I).

Secondary batteries, accumulators or rechargeable batteries are just some embodiments by which electrical energy can be stored after generation and used when required. Due to the significantly better power density, there has been a move in recent times away from the water-based secondary batteries to development of batteries in which the charge transport in the electrical cell is accomplished by lithium ions.

Since the terrestrial abundance of lithium is several magnitudes lower than the abundance of sodium or potassium the development of sodium ion based rechargeable electrochemical cell has started.

US 2010/0015256 describes sodium ion secondary batteries, wherein the active cathode material is for example NaMn₂O₄, NaNiO₂, NaCoO₂, NaFeO₂, NaNi_{0.5}Mn_{0.5}O2 or NaCrO₂.

WO 2012/060295 describes a composite metal oxide consisting of sodium, iron, manganese and oxygen having a P2 structure, wherein this composite metal oxide is an active cathode material for a sodium secondary batteries.

Sathiya et al., Chem. Mater. 2012, 24, 1846-1853 discloses the synthesis, structure and electrochemical properties of the layered sodium insertion cathode material: NaNi_{1/3}Mn_{1/3}CO_{1/3}O₂. Wu et al., J. Power Sources 281 (2015) 18-26 describes P2-type Na_{0.66}Ni_{0.33-x}ZnₓMn_{0.67}O₂ as new high-voltage cathode materials for sodium-ion batteries.
Zhao et al., Materials Letters 135 (2014) 131-134 discloses the synthesis of different metal ion substituted P2-Na_{2/3}Ni_{1/3}Mn_{2/3}O₂ cathode materials for Na ion batteries like Na_{2/3}Ni_{2/9}Mg_{1/9}Mn_{2/3}O₂.
WO 2014/122566 describes the synthesis of Na_{2/3}Ni_{1/3}Mn_{1/3}Ti_{1/3}O₂ and its use in rechargeable electrochemical cells. US20150171423 discloses a composite cathode active material for a non aqueous lithium battery.

H. Yoshida et al. Chem. Commun.,50,(2014),3677 disloses the use of P2-type Na_{2/3}Ni_{1/3}Mn_{2/3-x}TiₓO₂ as positive active material for sodium ion batteries. The sodium-ion batteries known from the prior art and their components, in particular the active cathode material, have to be improved with respect to at least one of the following properties: operability at room temperature, discharge capacity, mechanical stability, rate-capability, thermal stability or lifetime of the electrochemical cells or batteries. In particular the cycle performance of sodium based electrochemical cells has to be improved
This object is achieved by an active cathode material according to claim 1 of the general formula (I)

MₓNi_{a-y}M¹_{b}M²_{c}M³_{y}O₂ (I)

in which the variables are each defined as follows:
M is Na.

In one embodiment of the present invention the active cathode material of the general formula (I) is characterized in that M is Na.
M¹ is V, Cr, Mn, Fe, Co or a mixture thereof, in particular Mn.

In one embodiment of the present invention the active cathode material of the general formula (I) is characterized in that M¹ is Mn.
M² is Ge, Sn, Ti, Zr or a mixture thereof, in particular Ti.

In one embodiment of the present invention the active cathode material of the general formula (I) is characterized in that M² is Ti.
M³ is Zn

In one embodiment of the present invention the active cathode material of the general formula (I) is characterized in that M³ is Zn.

In a comparative example, the active cathode material of the general formula (I) is characterized in that M³ is Cu.

In a comparative example, the active cathode material of the general formula (I) is characterized in that M³ is Mg.
- x: is in the range from 0.5 to 0.8, preferably in the range from 0.6 to 0.7,
- a: is in the range from 0.25 to 0.35, in particular in the range from 0.33 to 0.34,
- b: is in the range from 0.05 to 0.7, preferably in the range from 0.4 to 0.6, in particular in the range from 0.45 to 0.55,
- c: is in the range from 0.02 to 0.6, preferably in the range from 0.10 to 0.25, in particular in the range from 0.16 to 0.17
- y: is in the range from 0.05 to 0.2, preferably in the range from 0.07 to 0.15, in particular in the range from 0.075 to 0.09.
wherein a + b + c = 1.
In one embodiment of the present invention the active cathode material of the general formula (I) is characterized in that M is Na, M¹ is Mn, M² is Ti, M³ is Zn, x is in the range from 0.6 to 0.7, a is in the range from 0.33 to 0.34, b is in the range from 0.45 to 0.55, c is in the range from 0.16 to 0.17 and y is in the range from 0.075 to 0.09.

In another comparative example, the active cathode material of the general formula (I) is characterized in that M is Na, M¹ is Mn, M² is Ti, M³ is Cu, x is in the range from 0.6 to 0.7, a is in the range from 0.33 to 0.34, b is in the range from 0.45 to 0.55, c is in the range from 0.16 to 0.17 and y is in the range from 0.075 to 0.09.

In a further comparative example, the active cathode material of the general formula (I) is characterized in that M is Na, M¹ is Mn, M² is Ti, M³ is Mg, x is in the range from 0.6 to 0.7, a is in the range from 0.33 to 0.34, b is in the range from 0.45 to 0.55, c is in the range from 0.16 to 0.17 and y is in the range from 0.075 to 0.09.
The inventive active cathode material of the general formula (I) MₓNi_{a-y}M¹_{b}M²_{c}M³_{y}O₂, also called active cathode material (A) for short hereafter, preferably has a layered structure, in particular a P2-type layered structure, such as Na_{0.7}CoO₂. The structure type can be identified by X-ray diffraction.

In one embodiment of the present invention the active cathode material of general formula (I) is characterized in that the material has a P2-type layered structure identified by X-ray diffraction.

The present invention further also provides process for preparing an active cathode material of the general formula (I)

MₓNi_{a-y}M¹_{b}M²_{c}M³_{y}O₂ (I),

as described above, comprising the process steps of
(a) preparation of a mixture of oxides of M, Ni, M¹, M² and M³ or compounds of said metals forming oxides during calcination wherein in said mixture the metals are available in the following molar ratio:
   0.5 to 0.8 molar equivalents of M,
   0.05 to 0.35 molar equivalents of Ni,
   0.05 to 0.7 molar equivalents of M¹,
   0.02 to 0.6 molar equivalents of M², and
   0.05 to 0.2 molar equivalents of M³,
(b) optionally pelletizing the mixture formed in process step (a)
(c) calcination of the mixture formed in process step (a) or (b) in a temperature range from 300 °C to 1200 °C, preferably in a temperature range from 800 °C to 1000 °C.

In this process, M, M¹, M² and M³ are each as defined above, especially also with regard to preferred embodiments thereof.

Oxides of M, Ni, M¹, M² and M³ or compounds of said metals forming oxides during calcination are in principle known to the person skilled in the art. Suitable compounds of said metals forming oxides during calcination are for example the corresponding hydroxides, carbonates, acetates, nitrates, sulfates, halides, citrates or oxalates.

Preferred alkali metal compounds are Na₂CO₃, NaHCO₃ or Na₂O₂, in particular Na₂CO₃. Preferred nickel compounds are Ni(OH)₂, Ni(NO₃)₂, NiO, Ni(acetate)₂, NiSO₄ or Ni(oxalate), in particular Ni(OH)₂. Preferred manganese compounds are MnCO₃, Mn₂O₃, MnO₂, or Mn(NO₃)₂, in particular Mn₂O₃ prepared by calcination of MnCO₃ · nH₂O. Preferred titanium compounds are TiO₂ or TiOSO₄, in particular TiO₂. Preferred zinc compounds are ZnO, ZnCO₃ or Zn-citrate. A preferred copper compound is Cu₂O. Preferred magnesium compounds are MgO, MgCO₃ or Mg(OH)₂, , in particular MgO. The listed starting compound can comprise water, in certain cases well defined amount of crystallization water.

In process step (a) a mixture of the starting compounds is prepared. Usually the molar ratio of M, Ni, M¹, M² and M³ in the mixture is close to or almost identical with the sought ratio of these metals in the final active cathode material of general formula (I). The starting compounds can be mixed together in pulverous form or together with certain amounts of a liquid dispersion medium. The mixture can be prepared in typical industrial mixers or blenders, like a ball mill, a V-type mixer or a planetary mixer. Preferably the starting compounds are not only mixed together for homogenization but also grinded in order to obtain a very homogenous mixture of these compounds as very fine powder.

In the optional process step (b) the mixture prepared in process step (a) is pelletized in order to simplify the handling of said mixture.

In process step (c) the mixture formed in process step (a) or (b) is calcined in a temperature range from 300 °C to 1200 °C, preferably in a temperature range from 800 °C to 1000 °C. The time of calcination can be varied in a wide range. Preferably the time of calcination is in the range from 2 hours to 48 hours, more preferably in the range from 6 hours to 18 hours. The calcination step can be performed in an air atmosphere, an inert atmosphere, a reducing atmosphere or an oxidizing atmosphere, depending of the nature of the starting compounds.

The inventive active cathode material of general formula (I) (A) as described above is particularly suitable as component of an electrode material for a rechargeable electrochemical cell. In addition to the active cathode material (A) the electrode material for a rechargeable electrochemical cell comprises carbon in a polymorph comprising at least 60% sp²-hybridized carbon atoms and optionally at least one polymer as a binder.

The present invention further provides an electrode material for a rechargeable electrochemical cell comprising
(A) an inventive active cathode material as described above,
(B) carbon in a polymorph comprising at least 60% sp²-hybridized carbon atoms, and
(C) optionally at least one polymer as a binder.

The inventive electrode material for a rechargeable electrochemical cell comprises, as well as the inventive active cathode material (A), carbon in a polymorph comprising at least 60% sp²-hybridized carbon atoms, preferably from 75% to 100% sp²- hybridized carbon atoms. In the context of the present invention, this carbon is also called carbon (B) for short, and is known as such. The carbon (B) is an electrically conductive polymorph of carbon. Carbon (B) can be selected, for example, from graphite, carbon black, carbon nanotubes, graphene or mixtures of at least two of the aforementioned substances.

In one embodiment of the present invention, carbon (B) is carbon black. Carbon black may, for example, be selected from lamp black, furnace black, flame black, thermal black, acetylene black and industrial black. Carbon black may comprise impurities, for example hydrocarbons, especially aromatic hydrocarbons, or oxygen-containing compounds or oxygen-containing groups, for example OH groups. In addition, sulfur- or iron-containing impurities are possible in carbon black.

In one variant, carbon (B) is partially oxidized carbon black.

In one embodiment of the present invention, carbon (B) comprises carbon nanotubes. Carbon nanotubes (CNTs for short), for example single-wall carbon nanotubes (SW CNTs) and preferably multiwall carbon nanotubes (MW CNTs), are known per se. A process for preparation thereof and some properties are described, for example, by A. Jess et al. in Chemie Ingenieur Technik 2006, 78, 94 - 100.

In the context of the present invention, graphene is understood to mean almost ideally or ideally two-dimensional hexagonal carbon crystals of analogous structure to single graphite layers.

In a preferred embodiment of the present invention, carbon (B) is selected from graphite, graphene, activated carbon and especially carbon black.

Carbon (B) may, for example, be in the form of particles having a diameter in the range from 0.1 to 100 µm, preferably 2 to 20 µm. The particle diameter is understood to mean the mean diameter of the secondary particles, determined as the volume average.

In one embodiment of the present invention, carbon (B) and especially carbon black has a BET surface area in the range from 20 to 1500 m²/g, measured to ISO 9277.

In one embodiment of the present invention, at least two, for example two or three, different kinds of carbon (B) are mixed. Different kinds of carbon (B) may differ, for example, with regard to particle diameter or BET surface area or extent of contamination.

In one embodiment of the present invention, the carbon (B) selected is a combination of two different carbon blacks.

In one embodiment of the present invention, the carbon (B) selected is a combination of carbon black and graphite.

In addition, the inventive electrode material for a rechargeable electrochemical cell optionally comprises, as well as the inventive active cathode material (A) and the carbon (B), at least one further polymer as a binder, which is also referred to in the context of the present invention as binder (C) for short. Binder (C) serves principally for mechanical stabilization of inventive electrode material.

In one embodiment of the present invention, binder (C) is selected from organic (co)polymers. Examples of suitable organic (co)polymers may be halogenated or halogen-free. Examples are polyethylene oxide (PEO), cellulose, carboxymethylcellulose, polyvinyl alcohol, polyethylene, polypropylene, polytetrafluoroethylene, polyacrylonitrile-methyl methacrylate copolymers, styrene-butadiene copolymers, tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers, ethylene-chlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polyimides and polyisobutene.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

The mean molecular weight M_{w} of binder (C) may be selected within wide limits, suitable examples being 20 000 g/mol to 1 000 000 g/mol.

In one embodiment of the present invention, the inventive electrode material comprises in the range from 0.1 to 15% by weight of binder, preferably 1 to 8% by weight and more preferably 3 to 6% by weight, based on the total mass of components (A), (B) and (C).

Binder (C) can be incorporated into inventive electrode material by various processes. For example, it is possible to dissolve soluble binders (C) such as polyvinyl alcohol in a suitable solvent or solvent mixture, water/isopropanol for example being suitable for polyvinyl alcohol, and to prepare a suspension with the further constituents of the electrode material. After application to a suitable substrate, the solvent or solvent mixture is removed, for example evaporated, to obtain an electrode composed of the inventive electrode material. A suitable solvent for polyvinylidene fluoride is NMP.

If it is desired to use sparingly soluble polymers as the binder (C), for example polytetrafluoroethylene or tetrafluoroethylene-hexafluoropropylene copolymers, a suspension of particles of the binder (C) in question and of the further constituents of the electrode material is prepared, and pressed together while being heated.

Inventive active cathode materials (A) and inventive electrode materials as described above are particularly suitable as or for production of electrodes, especially for production of cathodes of sodium-containing batteries. The present invention provides for the use of inventive active cathode materials (A) or inventive electrode materials as or for production of electrodes for rechargeable electrochemical cells.

The present invention further provides an electrode which has been produced from or using the inventive electrode material as described above.

In addition, the inventive electrode may have further constituents customary per se, for example an output conductor, which may be configured in the form of a metal wire, metal grid, metal mesh, expanded metal, metal sheet or metal foil, stainless steel being particularly suitable as the metal.

In the context of the present invention, that electrode which has reducing action in the course of discharging (work) is referred to as the cathode.

In one embodiment of the present invention, inventive active cathode material (A) or inventive electrode material is processed to cathodes, for example in the form of continuous belts which are processed by the battery manufacturer.

Cathodes produced from inventive active cathode material (A) or inventive electrode material may have, for example, thicknesses in the range from 20 to 500 µm, preferably 40 to 200 µm. They may, for example, be in the form of rods, in the form of round, elliptical or square columns or in cuboidal form, or in the form of flat cathodes.

The present invention further provides a rechargeable electrochemical cell comprising at least one inventive electrode as described above.

In one embodiment of the present invention, inventive rechargeable electrochemical cells comprise, as well as inventive active cathode material (A) or inventive electrode material, at least one anode, which comprises an alkali metal, preferably lithium or sodium, in particular sodium. The alkali metal, in particular sodium, may be present in the form of pure alkali metal or in the form of an alloy of an alkali metal with at least another metal or in the form of an alkali metal carbon intercalation compound.

In a further embodiment of the present invention, above-described inventive rechargeable electrochemical cells comprise, as well as inventive active cathode material (A) or inventive electrode material, a liquid electrolyte comprising a lithium-containing conductive salt.

In one embodiment of the present invention, inventive rechargeable electrochemical cells comprise, as well as inventive active cathode material (A) or inventive electrode material and a further electrode, especially an electrode comprising sodium, at least one nonaqueous solvent which may be liquid or solid at room temperature and is preferably liquid at room temperature, and which is preferably selected from polymers, cyclic or noncyclic ethers, cyclic or noncyclic acetals, cyclic or noncyclic organic carbonates and ionic liquids.

Examples of suitable polymers are especially polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (X) and (XI) 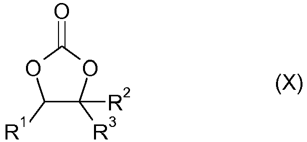 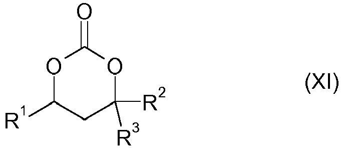 in which R¹, R² and R³ may be the same or different and are each selected from hydrogen and C₁-C₄-alkyl, for example methyl, ethyl, n-propyl, isopropyl, n-butyl, isobutyl, sec-butyl and tert-butyl, where R² and R³ are preferably not both tert-butyl.

In particularly preferred embodiments, R¹ is methyl and R² and R³ are each hydrogen, or R¹, R² and R³ are each hydrogen. Particularly preferred are propylene carbonate and ethylene carbonate.

Another preferred cyclic organic carbonate is vinylene carbonate, formula (XII).

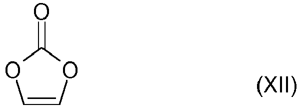

Preference is given to using the solvent(s) in what is called the anhydrous state, i.e. with a water content in the range from 1 ppm to 0.1% by weight, determinable, for example, by Karl Fischer titration.

Examples of suitable ionic liquids are known to the person skilled in the art. Several ionic liquids, which are liquid salts with a melting point below 100 °C, in particular below room temperature, are commercially available or can be prepared according to known protocols. Preferred ionic liquids are salts comprising a cation selected from the group of cations consisting of substituted imidazolium, substituted pyrrolidinium, substituted piperidinium, substituted pyridinium, substituted phosphonium and substituted ammonium, preferably consisting of substituted imidazolium and substituted pyrrolidinium, wherein substituted means the presence of at least one organic radical, and an anion selected from the group of anions consisting of (FSO₂)₂N⁻, (CF₃SO₂)₂N⁻ (TFSI⁻), CF₃SO₃⁻ (TFO⁻), ROSO₃⁻, RSO₃⁻ (R= e.g. Me or Et), tosylate, acetate, dialkylphospates and hydrogensulfate, preferably consisting of (FSO2)₂N⁻, (CF₃SO₂)₂N⁻, CF₃SO₃⁻, ROSO₃⁻ and RSO₃⁻ with R = Me or Et. Preferred examples of suitable ionic liquids are N-methyl-N-propylpyrrolidinium bis(fluorosulfonyl)imide, -butyl-1-methylpyrrolidinium bis(trifluoromethylsulfonyl) imide (BMP-TFSI) or 1-ethyl-3-methylimidazolium bis(trifluoromethylsulfonyl) imide (EMIm-TFSI).

In one embodiment of the present invention, inventive rechargeable electrochemical cells comprise one or more conductive salts, preference being given to sodium salts. Examples of suitable sodium salts are NaPF₆, NaBF₄, NaClO₄, NaAsF₆, NaCF₃SO₃, NaC(CₙF₂ₙ₊₁SO₂)₃, sodium imides such as NaN(CₙF₂ₙ₊₁SO₂)₂, where n is an integer in the range from 1 to 20, NaN(SO₂F)₂, Na₂SiF₆, NaSbF₆, NaAlCl₄, and salts of the general formula (CₙF₂ₙ₊₁SO₂)ₘXNa, where m is defined as follows:
m = 1 when X is selected from oxygen and sulfur,
m = 2 when X is selected from nitrogen and phosphorus, and
m = 3 when X is selected from carbon and silicon.

Preferred conducting salts are selected from NaCF₃SO₃, NaC(CF₃SO₂)₃, NaN(CF₃SO₂)₂, NaPF₆, NaBF₄, NaClO₄, and particular preference is given to NaPF₆ and NaCF₃SO₃

In one embodiment of the present invention, inventive rechargeable electrochemical cells comprise one or more separators by which the electrodes are mechanically separated from one another. Suitable separators are polymer films, especially porous polymer films, which are unreactive toward metallic alkali metal, in particular metallic sodium, and toward the electrolyte in the inventive rechargeable electrochemical cells.

Polyolefin separators, especially of polyethylene or polypropylene, may have a porosity in the range from 35 to 45%. Suitable pore diameters are, for example, in the range from 30 to 500 nm.

In another embodiment of the present invention, the separators selected may be separators composed of PET nonwovens filled with inorganic particles. Such separators may have a porosity in the range from 40 to 55%. Suitable pore diameters are, for example, in the range from 80 to 750 nm.

The inventive rechargeable electrochemical cells can be assembled to rechargeable batteries, preferably rechargeable alkali metal ion batteries, in particular rechargeable sodium ion batteries.

Accordingly, the present invention also further provides for the use of inventive rechargeable electrochemical cells as described above in rechargeable batteries, especially rechargeable sodium ion batteries.

The present invention further provides a rechargeable battery comprising at least one inventive rechargeable electrochemical cell as described above. Inventive rechargeable electrochemical cells can be combined with one another in inventive rechargeable batteries, for example in series connection or in parallel connection. Series connection is preferred.

Inventive electrochemical cells are notable for particularly high capacities, high performances even after repeated charging and greatly retarded cell death. Inventive electrochemical cells comprising inventive active cathode material as described above show an improved capacity retention combined with high energy density in comparison to electrochemical cells comprising known active cathode materials. Inventive rechargeable electrochemical cells are very suitable for use in motor vehicles, bicycles operated by electric motor, for example pedelecs, aircraft, ships or stationary energy stores. Such uses form a further part of the subject matter of the present invention.

The present invention further provides for the use of inventive rechargeable electrochemical cells as described above in motor vehicles, bicycles operated by electric motor, aircraft, ships or stationary energy stores.

The use of inventive rechargeable electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention therefore also further provides for the use of inventive rechargeable electrochemical cells in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The present invention further provides a device comprising at least one rechargeable electrochemical cell as described above.

The invention is illustrated by the examples which follow but do not restrict the invention.

Figures in percent are each based on % by weight, unless explicitly stated otherwise.

Active cathode materials were characterized by X-ray diffraction and scanning electron microscopy. The structural refinement of active cathode materials was carried out using the diffraction patterns obtained by using an X-ray diffractometer (MultiFlex, Rigaku Co.) with Cu Kα radiation without air exposure by using a laboratory made attachment. The morphological features of samples of active cathode material were observed by using a scanning electron microscope (Carl Zeiss Inc., SUPRA40, Germany).

### I. Preparation of active cathode materials

### I.1 Synthesis of Na_{2/3}Ni_{1/4}Mn_{1/2}Ti_{1/6}Zn_{1/12}O₂ (ACM-1)

The single phase and well crystallized P2-type Na_{2/3}Ni_{1/4}Mn_{1/2}Ti_{1/6}Zn_{1/12}O₂ was prepared by solid state reaction. Na_{2/3}Ni_{1/4}Mn_{1/2}Ti_{1/6}Zn_{1/12}O₂ samples were prepared from Na₂CO₃ (purity 99.0%), Mn₂O₃ (purity not determined), NiO (purity 99.0%), TiO₂ (purity 99.0%) and zinc citrate. The precursors were mixed using a ballmill (600 rpm, 12 h). The resulting mixture was pelletized. Thus obtained pellet was then heated at 900 °C for 12 h under an air atmosphere.
The used Mn₂O₃ was prepared by calcination of MnCO₃· nH₂O with a Mn-content of 43 - 46% by weight. Therefore the purity of the prepared Mn₂O₃ was not determined.

### 1.2 Synthesis of comparative sample Na_{2/3}Ni_{1/4}Mn_{1/2}Ti_{1/6}Mg_{1/12}O₂ (ACM-2)

The single phase and well crystallized P2-type Na_{2/3}Ni_{1/4}Mn_{1/2}Ti_{1/6}Mg_{1/12}O₂ was prepared by solid state reaction. Na_{2/3}Ni_{1/4}Mn_{1/2}Ti_{1/6}Mg_{1/12}O₂ was prepared from the stoichiometric amount of Na₂CO₃ (purity 99.0%), Mn₂O₃ (purity not determined), Ni(OH)₂ (purity 95%), TiO₂ (purity 99.0%) and MgO (purity 98.0%). The precursors were mixed using a ballmill (600 rpm, 12 h). The resulting mixture was pelletized. Thus obtained pellet was then heated at 900 °C for 12 h under an air atmosphere.
The used Mn₂O₃ was prepared by calcination of MnCO₃· nH₂O with a Mn-content of 43 - 46% by weight. Therefore the purity of the prepared Mn₂O₃ was not determined.

### 1.3 Synthesis of comparative sample Na_{2/3}Ni_{1/4}Mn_{1/2}Ti_{1/6}Cu_{1/12}O₂ (ACM-3)

The single phase and well crystallized P2-type Na_{2/3}Ni_{1/4}Mn_{1/2}Ti_{1/6}Cu_{1/12}O₂ was prepared by solid state reaction. Na_{2/3}Ni_{1/4}Mn_{1/2}Ti_{1/6}Cu_{1/12}O₂ was prepared from the stoichiometric amount of Na₂CO₃ (purity 99.0%), Mn₂O₃ (purity not determined), Ni(OH)₂ (purity 95%), TiO₂ (purity 99.0%) and Cu₂O (purity 90.0%). The precursors were mixed using a ballmill (600 rpm, 12 h). The resulting mixture was pelletized. Thus obtained pellet was then heated at 900 °C for 12 h under an air atmosphere.
The used Mn₂O₃ was prepared by calcination of MnCO₃· nH₂O with a Mn-content of 43 - 46% by weight. Therefore the purity of the prepared Mn₂O₃ was not determined.

### C-I.4 Synthesis of comparative sample Na_{2/3}Ni_{1/3}Mn_{1/2}Ti_{1/6}O₂ (C-ACM-4)

The single phase and well crystallized P2-type Na_{2/3}Ni_{1/3}Mn_{1/2}Ti_{1/6}O₂ was prepared by solid state reaction. Na_{2/3}Ni_{1/3}Mn_{1/2}Ti_{1/6}O₂ was prepared from the stoichiometric amount of Na₂CO₃ (purity 99.0%), Mn₂O₃ (purity not determined), NiO (purity 99%) and TiO₂ (purity 99.0%). The precursors were mixed using a ballmill (600 rpm, 12 h). The resulting mixture was pelletized. Thus obtained pellet was then heated at 900 °C for 12 h under an air atmosphere.
The used Mn₂O₃ was prepared by calcination of MnCO₃· nH₂O with a Mn-content of 43 - 46% by weight. Therefore the purity of the prepared Mn₂O₃ was not determined.

### C-I.5 Synthesis of comparative sample Na_{2/3}Ni_{1/4}Mn_{2/3}Zn_{1/12}O₂ (C-ACM-5)

The single phase and well crystallized P2-type Na_{2/3}Ni_{1/4}Mn_{2/3}Zn_{1/12}O₂ was prepared by solid state reaction. Na_{2/3}Ni_{1/4}Mn_{2/3}Zn_{1/12}O₂ was prepared from the stoichiometric amount of Na₂CO₃ (purity 99.0%), Mn₂O₃ (purity not determined), NiO (purity 99%) and zinc citrate (purity 99%). The precursors were mixed using a ballmill (600 rpm, 12 h). The resulting mixture was pelletized. Thus obtained pellet was then heated at 900 °C for 12 h under an air atmosphere. The used Mn₂O₃ was prepared by calcination of MnCO₃· nH₂O with a Mn-content of 43 - 46% by weight. Therefore the purity of the prepared Mn₂O₃ was not determined.

### II. Characterization of active cathode materials

Active cathode materials were characterized by X-ray diffraction All of Bragg diffraction lines of ACM-1, ACM-2, ACM-3, C-ACM-4, and C-ACM-5 were assigned into P2 type layered structure (space group: P6₃/mmc)
Note: Impurity of ZnO was observed in ACM-1, C-ACM-5.

### III. Electrochemical testing of active cathode materials

Assembly and operation of an electrochemical cell comprising an electrode comprising an active cathode material ACM

Coin-type cells (2032 type) were assembled to evaluate the electrode performance of an ACM. Positive electrodes consisted of 80 wt% ACM 10 wt% acetylene black, and 10 wt% poly(vinylidene fluoride), which were mixed with NMP and pasted on Al foil, and then dried at 80 °C in vacuum. Metallic sodium was used as a negative electrode. Electrolyte solution used was 1.0 mol/l NaPF₆ dissolved in propylene carbonate (Kishida Chemical Co. Ltd., Japan). A glass fiber filter (GB-100R, ADVANTEC Co. Ltd., Japan) was used as a separator. The cells were electrochemically cycled at a current density of 13 mA/g in a voltage range between 2.5 and 4.5 V at 25 °C. r).

Table 1 shows the comparison of inventive and non-inventive active cathode materials

**Table 1: Comparison of active cathode materials**

| | 1^{st} discharge Capacity / mAh g⁻¹ | Capacity retention (40 ^{th}) / % | Energy density / Wh g⁻¹ | Vₐᵥₑ at 1st dis. / V |
|---|---|---|---|---|
| ACM-1 | 113.8 | 99.46 | 410 | 3.60 |
| ACM-2 | 121.1 | 91.25 | 437 | 3.61 |
| ACM-3 | 122.8 | 95.39 | 446 | 3.63 |
| C-ACM-4 | 119.6 | 85.07 | 441 | 3.68 |
| C-ACM-5 | 111.0 | 97.31 | 397 | 3.58 |

## Claims

1. An active cathode material of the general formula (I)
MₓNi_{a-y}M¹_{b}M²_{c}M³_{y}O₂ (I)
in which the variables are each defined as follows:
M is Na,
M¹ is V, Cr, Mn, Fe, Co or a mixture thereof,
M² is Ge, Sn, Ti, Zr or a mixture thereof,
M³ is Zn,
x is in the range from 0.5 to 0.8,
a is in the range from 0.25 to 0.35,
b is in the range from 0.05 to 0.7,
c is in the range from 0.02 to 0.6,
y is in the range from 0.05 to 0.2
wherein a + b + c = 1.

2. The active cathode material according to claim 1, wherein M¹ is Mn.

3. The active cathode material according to claim 1 or 2, wherein M² is Ti.

4. The active cathode material according to any of claims 1 to 3, wherein x is in the range from 0.6 to 0.7, b is in the range from 0.4 to 0.6 and c is in the range from 0.1 to 0.25.

5. The active cathode material according to any of claims 1 to 3, wherein M is Na, M¹ is Mn, M² is Ti, M³ is Zn, x is in the range from 0.6 to 0.7, a is in the range from 0.33 to 0.34, b is in the range from 0.45 to 0.55, c is in the range from 0.16 to 0.17 and y is in the range from 0.075 to 0.09.

6. The active cathode material according to any of claims 1 to 5, wherein the material has a P2-type layered structure identified in X-ray diffraction.

7. An electrode material for a rechargeable electrochemical cell comprising
(A) an active cathode material according to any of claims 1 to 6,
(B) carbon in a polymorph comprising at least 60% sp²-hybridized carbon atoms, and
(C) optionally at least one polymer as a binder.

8. An electrode which has been produced from or using an electrode material according to claim 7.

9. A rechargeable electrochemical cell comprising at least one electrode according to claim 8.

10. The use of the rechargeable electrochemical cell according to claim 9 in motor vehicles, bicycles operated by electric motor, aircraft, ships or stationary energy stores.

11. A device comprising at least one rechargeable electrochemical cell according to claim 9.

12. A process for preparing an active cathode material of the general formula (I)
MₓNi_{a-y}M¹_{b}M²_{c}M³_{y}O₂ (I)
according to any of claims 1 to 6 comprising the process steps of
(a) preparation of a mixture of oxides of M, Ni, M¹, M² and M³ or compounds of said metals forming oxides during calcination wherein in said mixture the metals are available in the following molar ratio:
0.5 to 0.8 molar equivalents of M,
0.05 to 0.35 molar equivalents of Ni,
0.05 to 0.7 molar equivalents of M¹,
0.02 to 0.6 molar equivalents of M², and
0.05 to 0.2 molar equivalents of M³,
(b) optionally pelletizing the mixture formed in process step (a)
(c) calcination of the mixture formed in process step (a) or (b) in a temperature range from 300 °C to 1200 °C.

## Patentansprüche

1. Kathodenaktivmaterial der allgemeinen Formel (I)
MₓNi_{a-y}M¹_{b}M²_{c}M³_{y}O₂ (I),
in der die Variablen jeweils wie folgt definiert sind:
M steht für Na,
M¹ steht für V, Cr, Mn, Fe, Co oder eine Mischung davon,
M² steht für Ge, Sn, Ti, Zr oder eine Mischung davon,
M³ steht für Zn,
x liegt im Bereich von 0,5 bis 0,8,
a liegt im Bereich von 0,25 bis 0,35,
b liegt im Bereich von 0,05 bis 0,7,
c liegt im Bereich von 0,02 bis 0,6,
y liegt im Bereich von 0,05 bis 0,2,
wobei a + b + c = 1.

2. Kathodenaktivmaterial nach Anspruch 1, wobei M¹ für Mn steht.

3. Kathodenaktivmaterial nach Anspruch 1 oder 2, wobei M² für Ti steht.

4. Kathodenaktivmaterial nach einem der Ansprüche 1 bis 3, wobei x im Bereich von 0,6 bis 0,7 liegt, b im Bereich von 0,4 bis 0,6 liegt und c im Bereich von 0,1 bis 0,25 liegt.

5. Kathodenaktivmaterial nach einem der Ansprüche 1 bis 3, wobei M für Na steht, M¹ für Mn steht, M² für Ti steht, M³ für Zn steht, x im Bereich von 0,6 bis 0,7 liegt, a im Bereich von 0,33 bis 0,34 liegt, b im Bereich von 0,45 bis 0,55 liegt, c im Bereich von 0,16 bis 0,17 liegt und y im Bereich von 0,075 bis 0,09 liegt.

6. Kathodenaktivmaterial nach einem der Ansprüche 1 bis 5, wobei das Material eine bei der Röntgenbeugung identifizierte Schichtstruktur vom P2-Typ aufweist.

7. Elektrodenmaterial für eine wiederaufladbare elektrochemische Zelle, umfassend
(A) ein Kathodenaktivmaterial nach einem der Ansprüche 1 bis 6,
(B) Kohlenstoff in einer Modifikation, die mindestens 60 % sp²-hybridisierte Kohlenstoffatome umfasst, und
(C) gegebenenfalls mindestens ein Polymer als Bindemittel.

8. Elektrode, die aus einem Elektrodenmaterial nach Anspruch 7 oder unter Verwendung eines Elektrodenmaterials nach Anspruch 7 hergestellt wurde.

9. Wiederaufladbare elektrochemische Zelle mit mindestens einer Elektrode nach Anspruch 8.

10. Verwendung der wiederaufladbaren elektrochemischen Zelle nach Anspruch 9 in Kraftfahrzeugen, mit einem elektrischen Motor betriebenen Fahrrädern, Flugzeugen, Schiffen oder stationären Energiespeichern.

11. Vorrichtung mit mindestens einer wiederaufladbaren elektrochemischen Zelle nach Anspruch 9.

12. Verfahren zur Herstellung eines Kathodenaktivmaterials der allgemeinen Formel (I)
MₓNi_{a-y}M¹_{b}M²_{c}M³_{y}O₂ (I)
nach einem der Ansprüche 1 bis 6, das folgende Verfahrensschritte umfasst:
(a) Herstellen einer Mischung von Oxiden von M, Ni, M¹, M² und M³ oder Verbindungen der Metalle, die bei der Calcinierung Oxide bilden, wobei die Metalle in der Mischung im folgenden Molverhältnis verfügbar sind:
0,5 bis 0,8 Moläquivalente M,
0,05 bis 0,35 Moläquivalente Ni,
0,05 bis 0,7 Moläquivalente M¹,
0,02 bis 0,6 Moläquivalente M² und
0,05 bis 0,2 Moläquivalente M³,
(b) gegebenenfalls Pelletieren der in Verfahrensschritt (a) gebildeten Mischung,
(c) Calcinieren der in Verfahrensschritt (a) bzw. (b) gebildeten Mischung in einem Temperaturbereich von 300 °C bis 1200 °C.

## Revendications

1. Matériau actif de cathode de la formule générale (I)
MₓNi_{a-y}M¹_{b}M²_{c}M³_{y}O₂ (I)
dans lequel les variables sont chacune définies comme suit :
M est Na,
M¹ est V, Cr, Mn, Fe, Co ou un mélange de ceux-ci,
M² est Ge, Sn, Ti, Zr ou un mélange de ceux-ci,
M³ est Zn,
x se situe dans la gamme de 0,5 à 0,8,
a se situe dans la gamme de 0,25 à 0,35,
b se situe dans la gamme de 0,05 à 0,7,
c se situe dans la gamme de 0,02 à 0,6,
y se situe dans la gamme de 0,05 à 0,2,
dans lequel a + b + c = 1.

2. Matériau actif de cathode selon la revendication 1, dans lequel M¹ est Mn.

3. Matériau actif de cathode selon la revendication 1 ou 2, dans lequel M² est Ti.

4. Matériau actif de cathode selon l'une quelconque des revendications 1 à 3, dans lequel x se situe dans la gamme de 0,6 à 0,7, b se situe dans la gamme de 0,4 à 0,6 et c se situe dans la gamme de 0,1 à 0,25.

5. Matériau actif de cathode selon l'une quelconque des revendications 1 à 3, dans lequel M est Na, M¹ est Mn, M² est Ti, M³ est Zn, x se situe dans la gamme de 0,6 à 0,7, a se situe dans la gamme de 0,33 à 0,34, b se situe dans la gamme de 0,45 à 0,55, c se situe dans la gamme de 0,16 à 0,17 et y se situe dans la gamme de 0,075 à 0,09.

6. Matériau actif de cathode selon l'une quelconque des revendications 1 à 5, le matériau ayant une structure stratifiée de type P2 identifiée par diffraction des rayons X.

7. Matériau d'électrode pour une pile électrochimique rechargeable comprenant
(A) un matériau actif de cathode selon l'une quelconque des revendications 1 à 6,
(B) du carbone dans un polymorphe comprenant au moins 60 % d'atomes de carbone en hybridation sp², et
(C) éventuellement au moins un polymère comme liant.

8. Électrode qui a été produite à partir de ou utilisant un matériau d'électrode selon la revendication 7.

9. Pile électrochimique rechargeable comprenant au moins une électrode selon la revendication 8.

10. Utilisation de la pile électrochimique rechargeable selon la revendication 9 dans des véhicules à moteur, des bicyclettes à moteur électrique, un aéronef, des navires ou des dispositifs de stockage d'énergie stationnaires.

11. Dispositif comprenant au moins une pile électrochimique rechargeable selon la revendication 9.

12. Procédé de préparation d'un matériau actif de cathode de la formule générale (I)
MₓNi_{a-y}M¹_{b}M²_{c}M³_{y}O₂ (I)
selon l'une quelconque des revendications 1 à 6 comprenant les étapes de procédé de
(a) préparation d'un mélange d'oxydes de M, Ni, M¹, M² et M³ ou de composés desdits métaux formant des oxydes pendant la calcination, dans lequel dans ledit mélange les métaux sont disponibles dans la proportion molaire suivante :
0,5 à 0,8 équivalent molaire de M,
0,05 à 0,35 équivalent molaire de Ni,
0,05 à 0,7 équivalent molaire de M¹,
0,02 à 0,6 équivalent molaire de M², et
0,05 à 0,2 équivalent molaire de M³,
(b) agglomération éventuelle du mélange formé à l'étape de procédé (a),
(c) calcination du mélange formé à l'étape de procédé (a) ou (b) dans une gamme de température de 300 °C à 1200 °C.
